# EUROPEAN PATENT SPECIFICATION

(11) **EP 4 512 717 B1**
(45) Date of publication and mention of the grant of the patent: **04.11.2026**
(21) Application number: 23193547.9
(22) Date of filing: 25.08.2023
(51) Int. Cl.: B64D 11/04, E05B 63/18, E05B 63/20

(54) **LATCHING MECHANISM**
VERRIEGELUNGSMECHANISMUS
MÉCANISME DE VERROUILLAGE

(43) Date of publication of application: 26.02.2025
(73) Proprietor: B/E Aerospace (UK) Limited, Leighton Buzzard, Bedfordshire LU7 4TB (GB)
(72) Inventor: KESKIN, Volkan, EN3 6JN (GB)
(74) Representative: Dehns

(56) References cited:
- EP-B1- 2 875 200
- GB-A- 2 131 078
- GB-A- 2 423 787
- GB-A- 615 261
- JP-B2- 4 275 118
- US-A- 2 162 929
- US-A1- 2020 248 907
- US-B2- 7 399 009

## Description

### FIELD OF THE INVENTION

The invention relates to a latching mechanism and an aircraft galley.

### BACKGROUND

Trolleys are used in aircraft to store items such as food and drink. Trolleys are stored in an aircraft galley and are removed from the aircraft galley to permit access to stored items and to move the trolleys around the aircraft, but they are retained in the aircraft galley at other times for safety.

JP 4275118 B2 discloses a plane handle device.

US 7399009 B2 discloses a load floor hatch.

US 2162929 A discloses a door lock.

GB 2423787 A discloses a bi-directional bolt-restraint mechanism, with two bolts, comprising a reversible bolt restraint mechanism for restraining a bolt in a retracted position. Said mechanism comprises a sliding latch plate having opposing catch elements adapted to engage a corresponding catch feature provided on the bolt; and a latch plate drive arranged to bias the latch plate to engage the catch feature, the latch plate drive being adjustable to reverse the bias of the latch plate to restrain the bolt using either catch element.

GB 2131078 A discloses a bolt retaining device.

GB 615261 A discloses improvements in door and like locks.

### SUMMARY

In a first aspect there is provided a latching mechanism for an aircraft galley, according to claim 1.

By providing an actuator which maintains the latch bolt in the retracted position but moves the latch bolt to the extended position on closing the door, the latch bolt may remain clear of the door or the frame while the door is closed, and the door may be latched reliably on closing the door. The latch bolt remaining clear of the door or the frame may be particularly beneficial where the latch bolt needs to extend further from the door or the frame due to the latch striker being recessed e.g. to accommodate other components such as a secondary latch.

In an example, the contact element is configured to contact the aircraft galley on closing the door to cause the actuator to move the latch bolt to the extended position.

In an example, the actuator comprises a bias element, the bias element configured to bias the latch bolt towards the extended position.

In an example, the actuator comprises a pin to maintain the latch bolt in the retracted position, the actuator configured to retract the pin to permit movement of the latch bolt to the extended position.

In an example, the actuator comprises: a first actuating surface connected to the pin; an actuating arm; and a second actuating surface connected to the actuating arm, the second actuating surface configured to contact the first actuating surface, wherein the first and second actuating surfaces are angled such that movement of the actuating arm causes movement of the pin to retract the pin.

In an example, the latch bolt is configured to be mounted to the door.

In an example, the latch bolt is configured to extend above the door when the latch bolt is in the extended position.

In an example, the latching mechanism comprises the latch striker.

In an example, the latch striker is configured to be mounted to the frame.

In an example, the latch striker is configured to be mounted to the frame above the door.

In an example, the latching mechanism comprises an opening mechanism, the opening mechanism configured to return the latch bolt from the extended position to the retracted position to open the door.

According to a second aspect there is provided an aircraft galley according to claim 10.

In an example, the latching mechanism comprises a secondary latch, wherein the latch striker is mounted to the frame above the secondary latch.

According to the third aspect there is provided an aircraft comprising the aircraft galley described above.

### BRIEF DESCRIPTION OF THE DRAWINGS

Various examples will now be described with reference to the accompanying drawings in which:
Fig. 1 shows a front view of an aircraft galley;
Fig. 2 shows a perspective view of a portion of the aircraft galley;
Fig. 3 shows a front view of a portion of the aircraft galley with a door shown transparently;
Fig. 4 shows a side view of a latching mechanism with a latch bolt in a retracted position;
Fig. 5 shows a side view of a latching mechanism with the latch bolt in an extended position;
Fig. 6 shows a perspective view of a latching mechanism with the latch bolt in the retracted position;
Fig. 7 shows a cut-away perspective view of an actuator of the latching mechanism;
Fig. 8 shows a partial cut-away perspective view of a latching mechanism with the latch bolt in the retracted position;
Fig. 9 shows a perspective view of a latching mechanism with the latch bolt in the extended position;
Fig. 10 shows a cut-away perspective view of an actuator of the latching mechanism;
Fig. 11 shows a perspective view of a latching mechanism with the latch bolt in the extended position;
Fig. 12 shows a perspective view of the latching mechanism when the latch bolt is being returned to the retracted position; and
Fig. 13 shows a method of inserting and removing a trolley from an aircraft galley.

### DETAILED DESCRIPTION

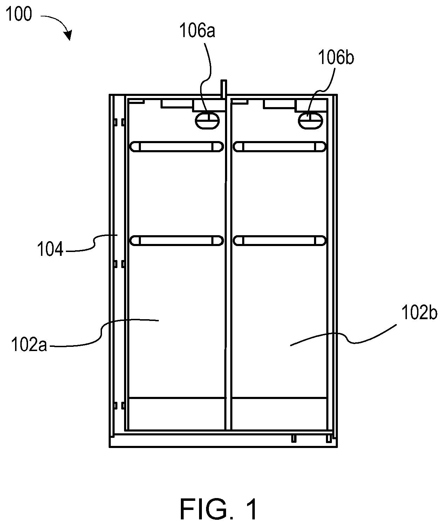

With reference to Fig. 1 there is shown an aircraft galley 100. The aircraft galley 100 comprises a first door 102a and a second door 102b.

The first door 102a covers a first opening, and the first door 102a (also referred to as a door 102) may be opened (from the closed position shown in Fig. 1) to permit a trolley to be inserted into the aircraft galley 100 through the first opening. The second door 102b covers a second opening, and the second door 102b may be opened (from the closed position shown in Fig. 1) to permit a trolley to be inserted into the aircraft galley 100 through the first opening.

The aircraft galley 100 comprises a frame 104. The frame 104 supports the first door 102a and the second door 102b. When the first door 102a is in the closed position, the first door 102a abuts the frame 104. When the second door 102b in the closed position, the second door 102b abuts the frame 104.

The aircraft galley 100 comprises a first latching mechanism 106a, which is an example of a latching mechanism 106 as referred to in relation to later figures. As described below, the first latching mechanism 106a is configured to latch the first door 102a in the closed position. The aircraft galley 100 further comprises a second latching mechanism 106b, which is an example of latching mechanism 106 as referred to in relation to later figures. The second latching mechanism 106b is configured to latch the second door 102b in the closed position.

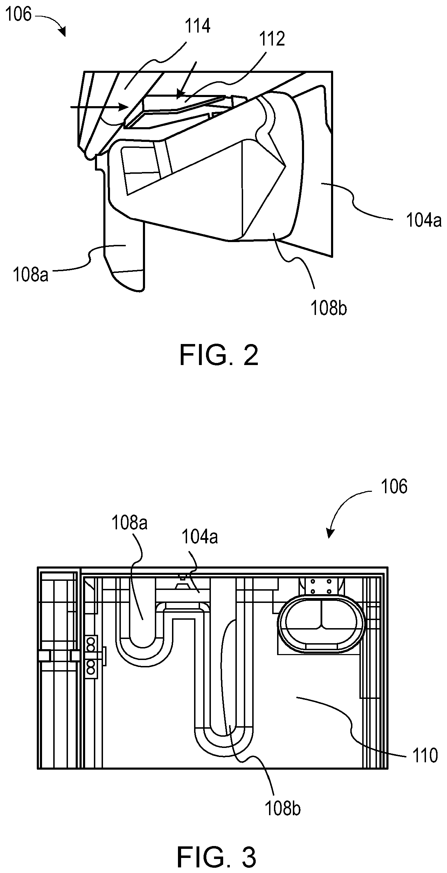

Referring to Fig. 2 and Fig. 3, the latching mechanism 106 comprises a secondary latch 108. The secondary latch 108a 108b comprises a first turn button 108a and a second turn button 108b. The second turn button 108b is longer than the first turn button 108a.

The first turn button 108a is rotatably mounted to an upper bar 104a of the frame 104. The second turn button 108b is rotatably mounted to the upper bar 104. Each of the first turn button 108a and second turn button 108b is rotatable between an open position (as shown for the second turn button 108b in Fig. 2) and a closed position (as shown for the first turn button 108a in Fig. 2 & 3 and for the second turn button 108b in Fig. 3). In the closed position, each turn button 108a 108b extends from the frame 104 (in the present example, downwardly from the upper bar 104a) in front of the trolley 110, thereby maintaining the trolley 110 in the aircraft galley 100.

In the open position, each turn button 108a 108b does not extend from the frame 104, with each turn button 108a 108b along the upper bar 104a. This permits the trolley 110 to be removed from the aircraft galley 100.

Fig. 2 further shows that the latching mechanism 106 comprises a latch striker 112. The latch striker 112 is recessed in the frame 104 above the secondary latch 108, more specifically above the second turn button 108b and above the upper bar 104a. Recessing the latch striker 112 in the frame 104 in this way provides more space for the second turn button 108b, allowing a longer and more reliable second turn button 108b to be used. The latch striker 112 is positioned above a door seal 114 of the frame 104.

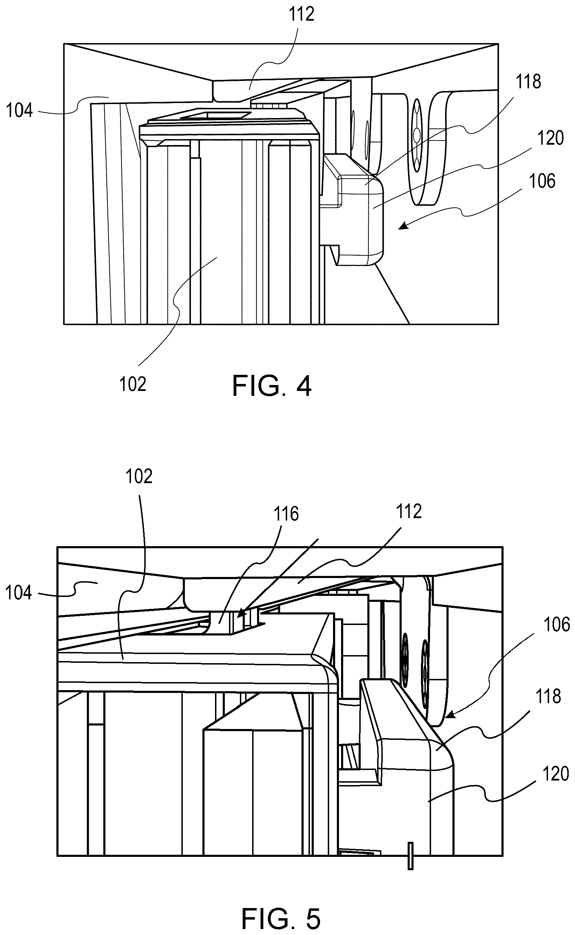

Referring to Fig. 4 and 5, the latching mechanism 106 further comprises a latch bolt 116. The latch bolt 116 is movable between a retracted position (as in Fig. 4) and an extended position (as in Fig. 5). When in the extended position, the latch bolt 116 extends from the door 102, such that the latch bolt 116 is received by the latch striker 112 when the door 102 is closed. When in the retracted position, the latch bolt 116 remains clear of the frame 104 (including the door seal 114) as the door 102 is closed.

The latching mechanism 106 further comprises an actuator 118. The actuator 118 is configured to maintain the latch bolt 116 in the retracted position. However, on closing the door 112, the actuator 118 causes the latch bolt 116 to move into the extended position, as explained below.

The actuator 118 comprises a contact element 120. The contact element 120 is a button 120. The contact element 120 stands proud of the door 102. The contact element 120 extends from an inner surface of the door 102 towards the trolley 110. When the door 102 is almost closed, the contact element 120 contacts the aircraft galley 100, in the present example, the frame 104. When the contact element 120 contacts the aircraft galley 100, as explained in more detail below, the contact element 120 is depressed (towards the door 102), which causes the actuator to move the latch bolt 116 to the extended position.

While the door 102 is closed, the latch bolt 116 remains in the extended position.

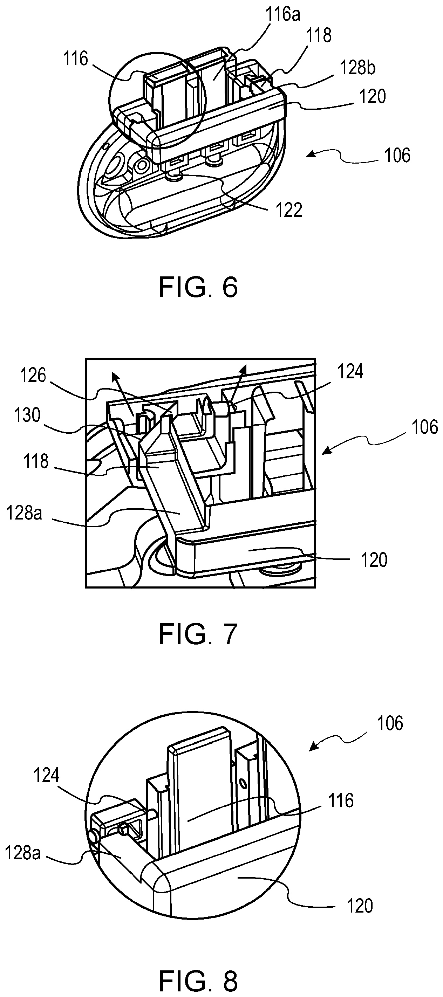

Fig. 6 to 8 depict the latching mechanism 106 in more detail when the latch bolt 116 is in the retracted position. The latch bolt 116 remains in the retracted position when the contact element 120 is not depressed.

The actuator 118 comprises a bias element 122. The bias element 122 is configured to bias the latch bolt 116 towards the extended position. The bias element 122 is a spring.

The actuator 118 further comprises a pin 124. The latch bolt 116 comprises an aperture 126. The aperture 126 is configured to receive the pin 124 when the latch bolt 116 is in the retracted position. The pin 124 thereby prevents the bias element pushing the latch bolt 116 to the extended position.

The actuator 118 further comprises an actuating arm 128a. The actuating arm 128a is connected to the contact element 120. The actuating arm 128a is integrally formed with the contact element 120. The actuating arm 128a extends in a first direction substantially normal to the contact element 120. The first direction is substantially parallel to the direction of the depressive force exerted on the contact element 120 by the trolley 110 when the door 102 is closed.

The pin 124 extends in a second direction, which is substantially normal to the first direction. The second direction is substantially normal to the direction of the depressive force exerted on the contact element 120 by the frame 104 when the door 102 is closed.

The actuator 118 comprises a first actuating surface 126 connected to the pin. The actuator 118 comprises a second actuating surfaces 130 connected to the actuating arm 128a. The first and second actuating surfaces 126 130 are angled with respect to the first direction. The first and second actuating surfaces 126 130 are angled with respect to the second direction. The first and second actuating surfaces 126 130 are substantially parallel to each other. The first and second actuating surfaces 126 130 are in contact with each other. As described below, the first and second actuating surfaces 126 130 are configured to slide relative to each other.

The latching mechanism 106 comprises an additional latch bolt 116a. The additional latch bolt 116a is positioned adjacent to the latch bolt 116, with the latching mechanism 106 being substantially symmetrical about a line of symmetry extending between the latch bolt 116 and the additional latch bolt 116a.

The latching mechanism 106 comprises an additional bias element, an additional pin (not shown), an additional actuating arm 128b and additional first and second actuating surfaces (not shown), which operate in the same manner as the bias element 122, the pin 124, the actuating arm 128a and the first and second actuating surfaces 126 130.

The additional actuating arm 128b is connected to the contact element 120. The additional actuating arm 128b is integrally formed with the contact element 120. The additional actuating arm 128b extends in the first direction. The additional actuating arm 128b extends parallel to the actuating arm 128a. The actuating arm 128a and the additional actuating arm 128b are an opposing sides of the contact element 120, which may better balance the forces on the contact element 120.

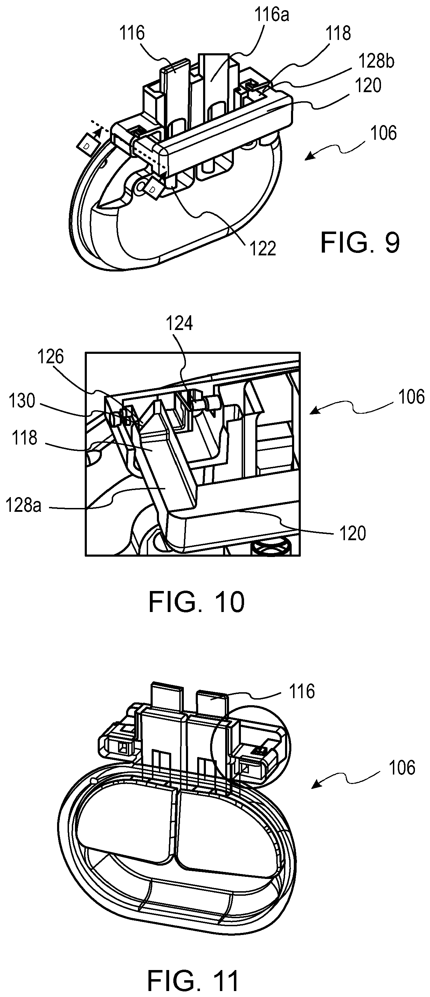

Fig. 9 to 11 depict the latching mechanism 106 in more detail when the latch bolt 116 is in the extended position. As mentioned above, in order to move the latch bolt 116 into the extended position, the door 102 is closed. Closing the door 102 causes the contact element 120 to be depressed by the frame 104.

Depressing the contact element 120 causes translation of the actuating arm 128a, which causes the first actuating surface 126 to move (slide) relative to the second actuating surface 130. Because of the angles of the first and second actuating surfaces 126 130 and because the second actuating surface 130 is outward (i.e. further from the latch bolt 116) of the first actuating surface 126, movement of the actuating arm 128a in the first direction causes outward movement of the pin 124, which causes the pin 124 to move out of the aperture in the latch bolt 116.

The pin 124 then no longer maintains the latch bolt 116 in the retracted position, and the bias element 122 pushes the latch bolt 116 into the extended position. The latch bolt 116 is received by the latch striker 112 to latch the door 102. After moving into the extended position, the latch bolt 116 remains in the extended position regardless of whether the contact element 120 is depressed. It will be understood that the additional latch bolt 116a moves into the extended position in the same manner as the latch bolt 116.

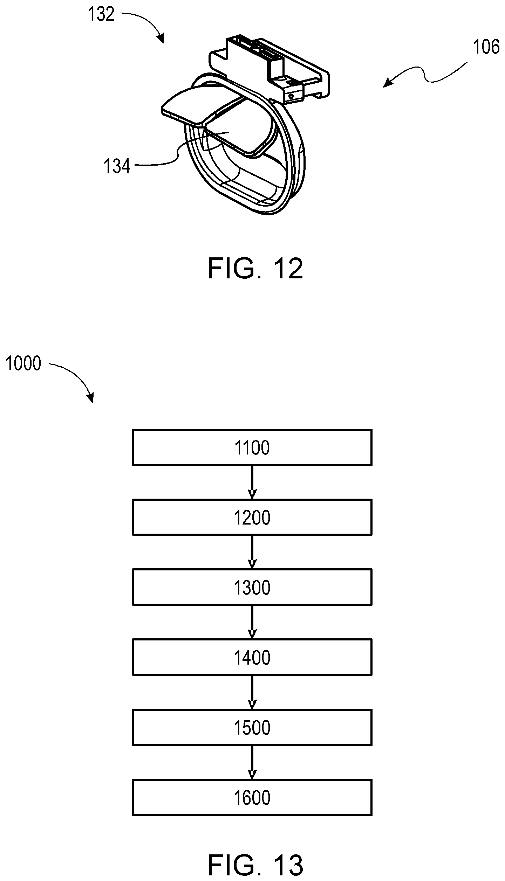

Fig. 12 shows the latching mechanism 106 when the latch bolt 116 is being returned to the retracted position. The latching mechanism 106 comprises an opening mechanism 132, which comprises a handle 134. The opening mechanism 132 causes the latch bolt 116 to return to the retracted position when the handle 134 is actuated, in the present example, when the handle 134 is rotated. It will be understood that various different mechanisms may be used to convert rotation of the handle 134 into translation of the latch bolt 116 from the extended to the retracted position (e.g. a rack and pinion mechanism).

While the user actuates the handle 134, they use the handle 134 to move the door 102 out of the closed position (e.g. by pulling the handle 134 to pull the door 102), which causes the contact element 120 to stop being depressed. This in turn allows the pin 124 to return into the aperture, maintaining the latch bolt 116 in the retracted position. It will be understood that the additional latch bolt 116a returns to the retracted position in the same manner as the latch bolt 116.

Fig. 13 shows a method 1000 of inserting and removing the trolley 110 into and from the aircraft galley 100. The method 1000 comprises a first door opening step 1100, a trolley insertion step 1200, a first door closing step 1300, a second door opening step 1400, a trolley removal step 1500 and a second door closing step 1600. At the beginning of the method 1000, the trolley 110 is outside the aircraft galley 100.

In the first door opening step 1100, the handle 134 is actuated, which causes the latch bolt 116 to move to the retracted position. The door 102 is pulled from the closed position, which causes the contact element 120 to stop being depressed, and the pin 124 maintains the latch bolt 116 in the retracted position. Having the latch bolt 116 in the retracted position may permit the door to be opened more easily, as the latch bolt 116 remains clear of the frame 104. The secondary latch 108a 108b is opened.

In the trolley insertion step 1200, the trolley 110 is inserted into the aircraft galley 100 through the opening resulting from the door 102 being opening. The secondary latch 108a 108b is closed.

In the first door closing step 1300, the door 102 is moved to the closed position. During movement of the door 102, the latch bolt 116 remains in the retracted position. However, on movement of the door 102 to the closed position, the latch bolt 116 moves to the extended position, wherein the latch bolt 116 is received by the latch striker 112 to latch the door. The latch bolt 116 remains in the extended position.

In the second door opening step 1400, when it is desired to remove the trolley from the aircraft galley 100, the door 102 is opened again as in the first door opening step 1100.

In the trolley removal step 1500, the secondary latch 108a 108b is opened and the trolley 102 is removed from the aircraft galley 100 through the opening resulting from the door 102 being opened.

In the second door closing step 1600, the door 102 is closed as in the first door closing step 1300. The method is repeated to re-insert the trolley 102 into the aircraft galley 100

In some examples, the latch bolt and latch striker may be reversed, such that the latch bolt is mounted to the frame and the latch striker mounted to the door. Various aspects of the apparatus and methods disclosed in the various embodiments may be used alone, in combination, or in a variety of arrangements not specifically discussed in the embodiments described in the foregoing, and this disclosure is therefore not limited in its application to the details and arrangement of components set forth in the foregoing description or illustrated in the drawings, but by the appended claims.

## Claims

1. A latching mechanism (106) for an aircraft galley (100), the aircraft galley (100) comprising a door (102) and a frame (104), the latching mechanism (106) comprising:
a latch bolt (116) movable between a retracted position and an extended position;
an additional latch bolt (116a);
an actuator (118) comprising a contact element (120), the actuator configured to maintain the latch bolt (116) in the retracted position, the actuator (118) configured to move the latch bolt (116) to the extended position on closing the door (102) in the frame (104),
an actuating arm (128a) connecting the latch bolt (116) to the contact element (120); and
an additional actuating arm (128b) connecting the additional latch bolt (116a) to the contact element (120);
wherein the latch bolt (116) is receivable by a latch striker (112) to latch the aircraft galley door (102) when the door (102) is closed and the latch bolt (116) is in the extended position;
wherein the actuator (118) configured to move the latch bolt (116) and the additional latch bolt (116a) to the extended position in response to the contact element (120) being pushed on closing the door ;
wherein the actuating arm (128a) and the additional actuating arm (128b) are on opposing sides of the contact element (120).

2. A latching mechanism (106) according to claim 1, wherein the contact element (120) is configured to contact the aircraft galley (100) on closing the door (102) to cause the actuator (118) to move the latch bolt (116) to the extended position.

3. A latching mechanism (106) according to any preceding claim, wherein the actuator (118) comprises a bias element (122), the bias element (122) configured to bias the latch bolt (116) towards the extended position.

4. A latching mechanism (106) according to claim 3, wherein the actuator (118) comprises a pin (124) to maintain the latch bolt (116) in the retracted position, the actuator (118) configured to retract the pin (124) to permit movement of the latch bolt (116) to the extended position.

5. A latching mechanism (106) according to claim 4, wherein the actuator (118) comprises:
a first actuating surface (126) connected to the pin (124);
an actuating arm (128a); and
a second actuating surface (130) connected to the actuating arm (128a), the second actuating surface (130) configured to contact the first actuating surface (126),
wherein the first (126) and second actuating surfaces (130) are angled such that movement of the actuating arm (128a) causes movement of the pin (124) to retract the pin (124).

6. A latching mechanism (106) according to any preceding claim, wherein the latch bolt (116) is configured to be mounted to the door (102).

7. A latching mechanism (106) according to claim 6, wherein the latch bolt (116) is configured to extend above the door when the latch bolt (116) is in the extended position.

8. A latching mechanism (106) according to any preceding claim and comprising the latch striker (112).

9. A latching mechanism (106) according to any of the preceding claims and comprising an opening mechanism (132), the opening mechanism (132) configured to return the latch bolt (116) from the extended position to the retracted position to open the door (102).

10. An aircraft galley (100) comprising a door (102), a frame (104) and the latching mechanism (106) according to any preceding claim.

11. An aircraft galley (100) according to claim 10, wherein the latching mechanism (106) comprises a secondary latch (108) for maintaining a trolley in the aircraft galley (100), wherein the latch striker (112) is mounted to the frame (104) above the secondary latch (108).

## Patentansprüche

1. Verriegelungsmechanismus (106) für eine Luftfahrzeugbordküche (100), die Luftfahrzeugbordküche (100) umfassend eine Tür (102) und einen Rahmen (104) und der Verriegelungsmechanismus (106) Folgendes umfassend:
einen Verriegelungsriegel (116), der zwischen einer eingefahrenen Position und einer ausgefahrenen Position bewegbar ist;
einen zusätzlichen Verriegelungsriegel (116a);
ein Betätigungsglied (118), umfassend ein Kontaktelement (120), wobei das Betätigungsglied ausgelegt ist, um den Verriegelungsriegel (116) in der eingefahrenen Position zu halten, und wobei das Betätigungsglied (118) ausgelegt ist, um den Verriegelungsriegel (116) beim Schließen der Tür (102) in dem Rahmen (104) in die ausgefahrene Position zu bewegen,
einen Betätigungsarm (128a), der den Verriegelungsriegel (116) mit dem Kontaktelement (120) verbindet; und
einen zusätzlichen Betätigungsarm (128b), der den zusätzlichen Verriegelungsriegel (116a) mit dem Kontaktelement (120) verbindet;
wobei der Verriegelungsriegel (116) von einem Verriegelungskeil (112) aufnehmbar ist, um die Tür (102) der Luftfahrzeugbordküche zu verriegeln, wenn die Tür (102) geschlossen ist und sich der Verriegelungsriegel (116) in der ausgefahrenen Position befindet;
wobei das Betätigungsglied (118) ausgelegt ist, um den Verriegelungsriegel (116) und den zusätzlichen Verriegelungsriegel (116a) als Reaktion auf das Gedrücktwerden des Kontaktelements (120) beim Schließen der Tür in die ausgefahrene Position zu bewegen;
wobei sich der Betätigungsarm (128a) und der zusätzliche Betätigungsarm (128b) auf gegenüberliegenden Seiten des Kontaktelements (120) befinden.

2. Verriegelungsmechanismus (106) nach Anspruch 1, wobei das Kontaktelement (120) ausgelegt ist, um beim Schließen der Tür (102) mit der Luftfahrzeugbordküche (100) in Kontakt zu kommen, um das Betätigungsglied (118) zu veranlassen, den Verriegelungsriegel (116) in die ausgefahrene Position zu bewegen.

3. Verriegelungsmechanismus (106) nach einem der vorhergehenden Ansprüche, wobei das Betätigungsglied (118) ein Vorspannelement (122) umfasst und das Vorspannelement (122) ausgelegt ist, um den Verriegelungsriegel (116) hin zu der ausgefahrenen Position vorzuspannen.

4. Verriegelungsmechanismus (106) nach Anspruch 3, wobei das Betätigungsglied (118) einen Stift (124) umfasst, um den Verriegelungsriegel (116) in der eingefahrenen Position zu halten, und das Betätigungsglied (118) ausgelegt ist, um den Stift (124) einzufahren, um eine Bewegung des Verriegelungsriegels (116) in die ausgefahrene Position zuzulassen.

5. Verriegelungsmechanismus (106) nach Anspruch 4, wobei das Betätigungsglied (118) Folgendes umfasst:
eine erste Betätigungsoberfläche (126), die mit dem Stift (124) verbunden ist;
einen Betätigungsarm (128a); und
eine zweite Betätigungsoberfläche (130), die mit dem Betätigungsarm (128a) verbunden ist, wobei die zweite Betätigungsoberfläche (130) ausgelegt ist, um in Kontakt mit der ersten Betätigungsoberfläche (126) zu kommen,
wobei die erste (126) und die zweite Betätigungsoberfläche (130) derart angewinkelt sind, dass eine Bewegung des Betätigungsarms (128a) eine Bewegung des Stifts (124) veranlasst, um den Stift (124) einzufahren.

6. Verriegelungsmechanismus (106) nach einem der vorhergehenden Ansprüche, wobei der Verriegelungsriegel (116) ausgelegt ist, um an der Tür (102) montiert zu werden.

7. Verriegelungsmechanismus (106) nach Anspruch 6, wobei der Verriegelungsriegel (116) ausgelegt ist, um sich über die Tür zu erstrecken, wenn sich der Verriegelungsriegel (116) in der ausgefahrenen Position befindet.

8. Verriegelungsmechanismus (106) nach einem der vorhergehenden Ansprüche und umfassend den Verriegelungskeil (112).

9. Verriegelungsmechanismus (106) nach einem der vorhergehenden Ansprüche und umfassend einen Öffnungsmechanismus (132), wobei der Öffnungsmechanismus (132) ausgelegt ist, um den Verriegelungsriegel (116) aus der ausgefahrenen Position in die eingefahrene Position zurückzuführen, um die Tür (102) zu öffnen.

10. Luftfahrzeugbordküche (100), umfassend eine Tür (102), einen Rahmen (104) und den Verriegelungsmechanismus (106) nach einem der vorhergehenden Ansprüche.

11. Luftfahrzeugbordküche (100) nach Anspruch 10, wobei der Verriegelungsmechanismus (106) eine sekundäre Verriegelung (108) zum Halten eines Wagens in der Luftfahrzeugbordküche (100) umfasst, wobei der Verriegelungskeil (112) oberhalb der sekundären Verriegelung (108) an dem Rahmen (104) montiert ist.

## Revendications

1. Mécanisme de verrouillage (106) pour une cuisine d'avion (100), la cuisine d'avion (100) comprenant une porte (102) et un cadre (104), le mécanisme de verrouillage (106) comprenant :
un pêne demi-tour (116) mobile entre une position rétractée et une position étendue ;
un pêne demi-tour supplémentaire (116a) ;
un actionneur (118) comprenant un élément de contact (120), l'actionneur étant configuré pour maintenir le pêne demi-tour (116) en position rétractée, l'actionneur (118) étant configuré pour déplacer le pêne demi-tour (116) en position étendue lors de la fermeture de la porte (102) dans le cadre (104),
un bras d'actionnement (128a) reliant le pêne demi-tour (116) à l'élément de contact (120) ; et
un bras d'actionnement supplémentaire (128b) reliant le pêne demi-tour supplémentaire (116a) à l'élément de contact (120) ;
dans lequel le pêne demi-tour (116) est reçu par un percuteur de pêne demi-tour (112) pour verrouiller la porte de la cuisine d'avion (102) lorsque la porte (102) est fermée et que le pêne demi-tour (116) est en position étendue ;
dans lequel l'actionneur (118) est configuré pour déplacer le pêne demi-tour (116) et le pêne demi-tour supplémentaire (116a) vers la position étendue en réponse à la pression de l'élément de contact (120) lors de la fermeture de la porte ;
dans lequel le bras d'actionnement (128a) et le bras d'actionnement supplémentaire (128b) sont situés de part et d'autre de l'élément de contact (120).

2. Mécanisme de verrouillage (106) selon la revendication 1, dans lequel l'élément de contact (120) est configuré pour entrer en contact avec la cuisine d'avion (100) lors de la fermeture de la porte (102) afin d'amener l'actionneur (118) à déplacer le pêne demi-tour (116) en position étendue.

3. Mécanisme de verrouillage (106) selon l'une quelconque des revendications précédentes, dans lequel l'actionneur (118) comprend un élément de rappel (122), l'élément de rappel (122) étant configuré pour rappeler le pêne demi-tour (116) vers la position étendue.

4. Mécanisme de verrouillage (106) selon la revendication 3, dans lequel l'actionneur (118) comprend une goupille (124) pour maintenir le pêne demi-tour (116) en position rétractée, l'actionneur (118) étant configuré pour rétracter la goupille (124) afin de permettre le déplacement du pêne demi-tour (116) en position étendue.

5. Mécanisme de verrouillage (106) selon la revendication 4, dans lequel l'actionneur (118) comprend :
une première surface d'actionnement (126) reliée à la goupille (124) ;
un bras d'actionnement (128a) ; et
une seconde surface d'actionnement (130) reliée au bras d'actionnement (128a), la seconde surface d'actionnement (130) étant configurée pour entrer en contact avec la première surface d'actionnement (126),
dans lequel les première (126) et seconde surfaces d'actionnement (130) sont inclinées de telle sorte que le mouvement du bras d'actionnement (128a) provoque le mouvement de la goupille (124) pour rétracter la goupille (124).

6. Mécanisme de verrouillage (106) selon l'une quelconque des revendications précédentes, dans lequel le pêne demi-tour (116) est configuré pour être monté sur la porte (102).

7. Mécanisme de verrouillage (106) selon la revendication 6, dans lequel le pêne demi-tour (116) est configuré pour s'étendre au-dessus de la porte lorsque le pêne demi-tour (116) est en position étendue.

8. Mécanisme de verrouillage (106) selon l'une quelconque des revendications précédentes et comprenant le percuteur de pêne (112).

9. Mécanisme de verrouillage (106) selon l'une quelconque des revendications précédentes et comprenant un mécanisme d'ouverture (132), le mécanisme d'ouverture (132) étant configuré pour ramener le pêne demi-tour (116) de la position étendue à la position rétractée pour ouvrir la porte (102).

10. Cuisine d'avion (100) comprenant une porte (102), un cadre (104) et le mécanisme de verrouillage (106) selon l'une quelconque des revendications précédentes.

11. Cuisine d'avion (100) selon la revendication 10, dans laquelle le mécanisme de verrouillage (106) comprend un pêne secondaire (108) pour maintenir un chariot dans la cuisine d'avion (100), dans laquelle le percuteur de pêne (112) est monté sur le cadre (104) au-dessus du pêne secondaire (108).
